# EUROPÄISCHE PATENTSCHRIFT

(11) **EP 3 173 392 B1**
(45) Veröffentlichungstag und Bekanntmachung des Hinweises auf die Patenterteilung: **21.04.2021**
(21) Anmeldenummer: 16200487.3
(22) Anmeldetag: 24.11.2016
(51) Int. Cl.: C04B 35/486, C04B 35/638, C04B 35/645, A61C 13/083, A61C 13/00, A61C 8/00

(54) **VERFAHREN ZUR HERSTELLUNG VON KERAMIKTEILEN**
METHOD FOR PRODUCING CERAMIC PARTS
PROCÉDÉ DE FABRICATION D'ÉLÉMENTS EN CÉRAMIQUE

(30) Priorität: 27.11.2015 CH 17392015
(43) Veröffentlichungstag der Anmeldung: 31.05.2017
(73) Patentinhaber: maxon international ag, 6072 Sachseln (CH)
(72) Erfinder: ZIMMERMANN, Dirk, 79350 Sexau (DE)
(74) Vertreter: IPrime Rentsch Kaelin AG

(56) Entgegenhaltungen:
- WO-A1-00/46168
- WO-A2-2015/168332
- DE-A1-102006 062 712
- DE-A1-102013 017 193
- US-A- 4 915 899
- US-A1- 2015 122 147
- US-A1- 2015 157 430
- G W LIU ET AL: "Fabrication of coloured zirconia ceramics by infiltrating water debound injection moulded green body", ADVANCES IN APPLIED CERAMICS: STRUCTURAL, FUNCTIONAL ANDBIOCERAMICS, Bd. 110, Nr. 1, 1. Januar 2011 (2011-01-01), Seiten 58-62, XP055253045, GB ISSN: 1743-6753, DOI: 10.1179/174367509X12502621261532

## Beschreibung

Die Erfindung betrifft ein Verfahren zur Herstellung von Keramikteilen gemäss unabhängigem Anspruch 1.

### Technologischer Hintergrund

Technische Keramiken haben sich wegen ihrer vorteilhaften Materialeigenschaften für viele Anwendungen etabliert. Je nach verwendetem Keramikmaterial lassen sich Eigenschaften erhalten, die mit anderen Werkstoffen wie Metallen und Polymeren in dieser Art und Kombination nicht möglich wären. Vorteilhafte Eigenschaften verschiedener Keramikmaterialien sind unter anderem hohe mechanische Festigkeit und Steifigkeit, hohe Härte und Abriebfestigkeit, Hitzebeständigkeit, hohe Dielektrizitätskonstanten und gute Biokompatibilität.

Als beispielhafte Beschreibung der Anwendung technischer Keramik für Getriebebauteile, der damit verbundenen Vorteile und eines möglichen Herstellungsprozesses wird verwiesen auf: Zimmermann, Dirk; Keramische Bauteile für hochbeanspruchte Kleinantriebe; in: Antriebstechnik, F&M, 105 (1997) 4, Carl Hanser Verlag, München, 1997, S. 217-220; sowie auf: Zimmermann, Dirk; Keramik in Antrieben; in: at - Aktuelle Technik, 2/2002, B+L Verlags AG, Schlieren, 2002, S.26-28.

Ferner beschreibt die US2001053937A ein Verfahren zur Herstellung von Knochenersatzmaterial mit steifem durchgängigem keramischem Stützwerk, wobei zunächst zur Erzeugung eines Schlickers aus Keramikpulver, beispielsweise Zirkonoxid, einem organischen Binder und Wasser eine Dispersion geformt wird. Dann wird die Stützstruktur eines netzartigen offenporigen organischen Schaums, beispielsweise aus Polyurethan, Polyester, Polyether oder ähnlichem mit dem Schlicker überzogen. Dazu kann der Schaum in den Schlicker getaucht und überschüssiger Schlicker anschliessend entfernt werden. Danach wird der übrige Schlicker getrocknet, die Stützstruktur unterhalb einer Sintertemperatur pyrolisiert und abschliessend das verbleibende keramische Stützwerk gesintert.

Das Verhalten des in der US2001053937A beschriebenen keramischen Stützwerks bei Einwirkung mechanischer Belastungen soll verbessert werden, indem in dessen Zwischenräume ein osteokonduktives Material sowie zwischen diesem und dem Stützwerk ein bioresorbierbares elastisches Material eingebracht werden. Beim osteokonduktiven Material kann es sich um eine weitere Keramik, wie beispielsweise Kalziumphosphat, handeln, das zusammen mit einem organischen Binder nach dem ersten Sintern und Abkühlen in die Zwischenräume des Stützwerks eingebracht wird. Nach einem weiteren Sinterschritt ist der Binder pyrolisiert und das Kalziumphosphat bildet eine weitere netzartige Struktur, die aufgrund Schwindung beim Sintern vom Stützwerk beabstandet ist. Die Ablösung des Kalziumphosphats vom Stützwerk lässt sich verbessern, indem letzteres vorab mit Paraffin leicht benetzt wird. Der verbleibende Zwischenraum wird mit dem bioresorbierbaren elastischen Material gefüllt, wobei es sich beispielsweise um ein Polymer wie Collagen handeln kann, das von einem Körper resorbiert wird, sobald dessen eigenes Knochenmaterial beim Heilungsprozess in die Zwischenräume hinein wächst. Das osteokonduktive Material kann alternativ auch erst während eines chirurgischen Eingriffs in die Zwischenräume der mit dem bioresorbierbaren, elastischen Material beschichteten Stütz-struktur beschichteten Stützwerks eingebracht werden

US4915899, WO2015/168332, DE102013017193, WO00/46168, US2015/122147, US2015/157430 und DE102006062712 sind weitere relevante Dokumente im Stand der Technik.

Bei aus dem Stand der Technik bekannten Verfahren und Keramikeilen ist von Nachteil, dass sie nur beschränkt den Anforderungen an technische Keramik genügen.

### Darstellung der Erfindung

Aufgabe der Erfindung ist es, vorteilhafte Verfahren zur Herstellung von Keramikteilen zur Verfügung zu stellen. Solche Herstellungsverfahren sollen eine hohe Prozesssicherheit aufweisen und eine gleichbleibende hohe Qualität der Keramik sicherstellen.

Diese und andere Aufgaben werden gelöst durch ein erfindungsgemässes Herstellungsverfahren gemäss dem unabhängigen Anspruch. Weitere bevorzugte Ausführungsformen sind in den abhängigen Ansprüchen gegeben.

Die Nachteile aus dem Stand werden durch ein erfindungsgemässes Verfahren insbesondere überwunden, indem zur Herstellung von wenigstens einem gesinterten Keramikteil ein zumindest noch nicht vollständig gesintertes Keramikteil wenigstens bereichsweise mit einem Additiv versehen und anschliessend gesintert wird, wobei das Zusatzmaterial vorm und/oder beim Sintern reduziert wird.

Dies hat gegenüber dem Stand der Technik den Vorteil, dass die Eigenschaften der nach dem vollständigen Abschluss des Sinterprozesses vorliegenden keramischen Struktur auf bisher nicht bekannte Weise durch das Additiv beeinflusst werden können. So lassen sich zum einen die Festigkeitseigenschaften der Keramik beeinflussen. Zum anderen können weitere physikalische und/oder chemische Eigenschaften der Keramik beeinflusst werden, wie beispielsweise ihre Wärme- und/oder Elektrizitätsleitfähigkeit bzw. chemische Reaktivität oder katalytischen Eigenschaften. Das Additiv kann beispielsweise als Flüssigkeit bzw. in einem im Wesentlichen flüssigen Zustand vorliegen.

Die erfindungsgemäße Lösung kann durch die folgenden weiteren, jeweils für sich vorteilhaften Ausführungsformen beliebig ergänzt und weiter verbessert werden:

Gemäss der Erfindung liegt zumindest ein mit dem Additiv versehener Bereich des Keramikteils vor dem Sintern in einem offenporösem Braunkörperzustand vor. Die offenporöse Struktur des Braunkörpers kann besonders gut dazu genutzt werden, um Additive darin aufzunehmen. Zur Aufnahme der Additive können beispielsweise Kapillarwirkungseffekte genutzt werden, die beim Braunkörper besonders stark auftreten können.

Gemäss einer weiteren Ausführungsform wird das Additiv in Zwischenräume zwischen keramischen Partikeln des Keramikteils eingebracht. Die keramischen Partikel können im Wesentlichen Korngrössen von beispielsweise 100 bis 300 oder bis 350 nm aufweisen. Zwischen den Partikeln gebildete Zwischenräume können Abmasse in einer ähnlichen Grössenordnung wie die keramischen Partikel besitzen. Durch das Einbringen des Additivs in die Zwischenräume lässt sich eine innige Verbindung zwischen den keramischen Partikeln und dem Additiv oder Teilen davon erzielen.

Gemäss einer weiteren Ausführungsform bilden wenigstens Teile des Additivs und gesinterte keramische Partikel einen im Wesentlich porenfreien Verbund. Zum einen kann dieser Verbund gewünschte Festigkeitseigenschaften aufweisen, indem er beispielsweise einen den jeweiligen Anforderungen entsprechenden Härtegrad aufweist. Zum anderen kann der Verbund insbesondere spezielle wärme- und/oder elektrizitätsleitende Eigenschaften aufweisen.

Gemäss der Erfindung wird eine Oberfläche des Keramikteils zumindest abschnittsweise mit dem Additiv benetzt. Durch die Benetzung kann zumindest abschnittsweise eine besondere Oberfläche am Keramikteil ausgebildet bzw. können Eigenschaften der Oberfläche zumindest abschnittsweise beeinflusst werden. Das Additiv kann dazu genutzt werden, eine Beschichtung des Keramikteils auszubilden.

Gemäss einer weiteren Ausführungsform wird das Additiv bis zu einer von der Oberfläche aus gemessenen Eindringtiefe in das Keramikteil eingebracht. Somit kann eine mit dem Additiv versehene keramische Schicht bereitgestellt werden. Die Eindringtiefe kann den jeweiligen Anforderungen gemäss eingestellt werden, indem das Keramikteil beispielsweise für eine gewisse Zeitspanne und/oder bis zu einer gewissen Tiefe in das Additiv eingetaucht bzw. diesem ausgesetzt wird.

Gemäss einer weiteren Ausführungsform werden ein undotierter Bereich des gesinterten Keramikteils, der vor dem Sintern nicht mit dem Additiv versehen worden war, und ein dotierter Bereich, der vor dem Sintern mit dem Additiv versehen worden war, gebildet. Beispielsweise können die Bereiche durchs Sintern ausgebildet bzw. endgültig fixiert werden. Die Bereiche lassen sich durch lokales Auftragen des Additivs und/oder Eintauchen des noch nicht vollständig gesinterten Keramikteils in das Additiv ausbilden. Beispielsweise kann das noch nicht vollständig gesinterte Keramikteil mit dem Additiv bestrichen und/oder besprüht werden. Das Bestreichen und/oder Besprühen kann zonenweise so geschehen, dass gewünschte Muster bzw. geometrische Strukturen ausgebildet werden.

Gemäss einer weiteren Ausführungsform besitzt der dotierte Bereich eine höhere elektrische und/oder thermische Leitfähigkeit als der undotierte Bereich. Die unterschiedlichen Leitfähigkeiten können sowohl bei der Fertigung als auch bei der späteren Anwendung des gesinterten Keramikteils genutzt werden. Insbesondere kann der undotierte Bereich im Wesentlichen dielektrische bzw. wärmedämmende Eigenschaften aufweisen, wohingegen der dotierte Bereich sich durch eine gewisse elektrische und/oder thermische Leitfähigkeit auszeichnet. Somit sind die beiden Bereiche sensorisch und/oder schaltungstechnisch voneinander unterscheidbar. Diese Unterscheidbarkeit kann beispielsweise für Orts- bzw. Positionsbestimmungen des Keramikteils und/oder Verschleissanzeigen benutzt werden. Auch lässt sich das Keramikteil als elektrisches und/oder thermisches Schaltungselement einsetzen.

Gemäss einer weiteren Ausführungsform wird der dotierte Bereich durch Einbringen elektrischer Energie nach dem Sintern erodiert. Durch das Erodieren lassen sich die mechanischen bzw. tribologischen Eigenschaften des Keramikteils beeinflussen. Insbesondere kann die Oberfläche des Keramikteils gezielt lokal oder grossflächig anforderungsgemäss verändert, beispielsweise aufgerauht werden.

Gemäss der Erfindung umfasst das Additiv ein Zusatzmaterial und eine dieses aufnehmende Transportsubstanz. Das Zusatzmaterial und die Transportsubstanz können in ihren Anteilen und ihrer Zusammensetzung beispielsweise gemäss den gewünschten rheologischen Eigenschaften des Additivs und/oder der porösen Eigenschaften des noch nicht vollständig gesinterten Keramikteils eingestellt werden, um deren gewünschtes Zusammenwirken zu erreichen. Verschiedene Zusatzmaterialien und Transportsubstanzen können den jeweiligen Anforderungen beliebig miteinander kombiniert werden.

Gemäss einer weiteren Ausführungsform wird die Transportsubstanz vor dem und/oder beim Sintern wenigstens teilweise verdampft und/oder dissoziiert. Somit lässt sich die Transportsubstanz lediglich als Hilfsmittel zur Anwendung des Zusatzmaterials einsetzen. Beispielsweise kann die Transportsubstanz im Wesentlichen vollständig verdampft und/oder dissoziiert werden, wodurch im Wesentlichen nur noch das Zusatzmaterial aus dem Additiv verbleibt.

Gemäss einer weiteren Ausführungsform wird das Zusatzmaterial vor dem und/oder beim Sintern wenigstens teilweise dissoziiert. Es können eine Vielzahl von Zusatzmaterialien eingesetzt werden, die chemische und/oder physikalische Wechselwirkungen miteinander, mit der Transportsubstanz, weiteren Reaktanden und/oder Hilfsmitteln, wie beispielsweise Fluidströmen bzw. elektromagnetischer Strahlung, eingehen können. Somit lässt sich die chemische und/oder physikalische Zusammensetzung des Zusatzmaterials nach der Anwendung beeinflussen.

Gemäss einer weiteren Ausführungsform umfasst das Zusatzmaterial in der Transportsubstanz dispergierte Nanopartikel und/oder in der Transportsubstanz gelöste Stoffe. Eine offene Porosität Φ eines aus dem Grünling gewonnenen Braunlings kann dazu genutzt werden, Fluide bzw. Emulsionen und Dispersionen zumindest bis zu einer gewissen Tiefe unterhalb der Oberfläche des Braunlings in diesen einzubringen. Mittels der Emulsionen und Dispersionen können Partikel bzw. Nanopartikel in den Braunling eingebracht und mitgesintert werden. Die Partikel sollten zu einem Grad kleiner sein als die Poren des Braunlings, der es ihnen ermöglicht, in die Poren einzudringen. Dementsprechend werden hierfür sogenannte Nanopartikel verwendet, deren Durchmesser in der Regel zwischen 1 und 100 nm liegt, vorzugsweise im Bereich von 5 bis 10 nm.

Durch die eingebrachten Nanopartikel kann das Gefüge und/oder die Festigkeit des Keramikteils zumindest lokal oder oberflächlich beeinflusst werden. Indem die Partikelgrössen der eingebrachten Nanopartikel untereinander und/oder von den Partikelgrössen der keramischen Rohmasse abweichen, können die gesamten mechanischen Eigenschaften der Keramik beeinflusst werden.

Des Weiteren können eingebrachte Nanopartikel in den von ihnen infiltrierten Bereichen des Keramikteils zur Beeinflussung der elektrischen und/oder thermischen Leitfähigkeit eingesetzt werden. Beispielsweise können andere Keramiken, Metalle und/oder anorganische Substanzen, wie z.B. Silizium, Siliziumoxyd und/oder Kohlenstoff als Nanopartikel in das Keramikteil eingebracht werden, wodurch sich das Keramikteil zumindest abschnittsweise sozusagen dotieren lässt.

In den Braunling eingebrachte und mitgesinterte leitfähige Partikel können dazu genutzt werden, entsprechend lokal begrenzt elektrische Energie in das Keramikteil einzubringen. Zwischen den leitfähigen Partikeln werden Kurzschlüsse erzeugt. Im Bereich dieser Kurzschlüsse wird das Keramikmaterial erodiert und somit geschwächt, wodurch sich beispielsweise, wie schon oben erwähnt, Sollbruchstellen oder Verschleissanzeigen realisieren lassen.

Alternativ oder zusätzlich können die in Lösung befindlichen Zusatzmaterialien bzw. Stoffe durch ein Verdampfen des Lösungsmittels am und/oder im Keramikteil abgelagert werden. Beispielsweise können diese Stoffe als Salze vorliegen. Auch können den jeweiligen Anforderungen gemäss Stoffgemische eingesetzt werden.

Gemäss einer weiteren Ausführungsform werden bzw. wird das Zusatzmaterial und/oder daraus gewonnener Zusatzstoff mitgesintert. Somit können Zusatzmaterial und/oder Zusatzstoff eine innige Verbindung mit dem keramischen Material eingehen. Insbesondere können Zusatzmaterial und/oder Zusatzstoff Zwischenräume zwischen keramischen Partikeln aus- bzw. auffüllen.

### Kurze Beschreibung der Zeichnungen

Zum besseren Verständnis der vorliegenden Erfindung wird nachfolgend auf die Zeichnungen Bezug genommen. Diese zeigen lediglich Ausführungsbeispiele des Erfindungsgegenstands.
- Figur 1: zeigt schematisch die einzelnen Schritte eines Herstellungsverfahrens für Keramikteile.
- Figur 2: zeigt eine schematische Querschnittsansicht eines Abschnittes eines Keramikteils im Braunzustand.
- Figur 3: zeigt den in Figur 2 gezeigten Abschnitt des Keramikteils in einer analogen schematischen Querschnittsansicht samt einer eingebrachten Dispersion als Additiv.
- Figur 4: zeigt eine schematische Querschnittsansicht eines Abschnittes eines gesinterten Keramikteils, das aus dem Keramikteil im Braunzustand samt darin aufgenommenem Additiv gebildet ist.

### Ausführung der Erfindung

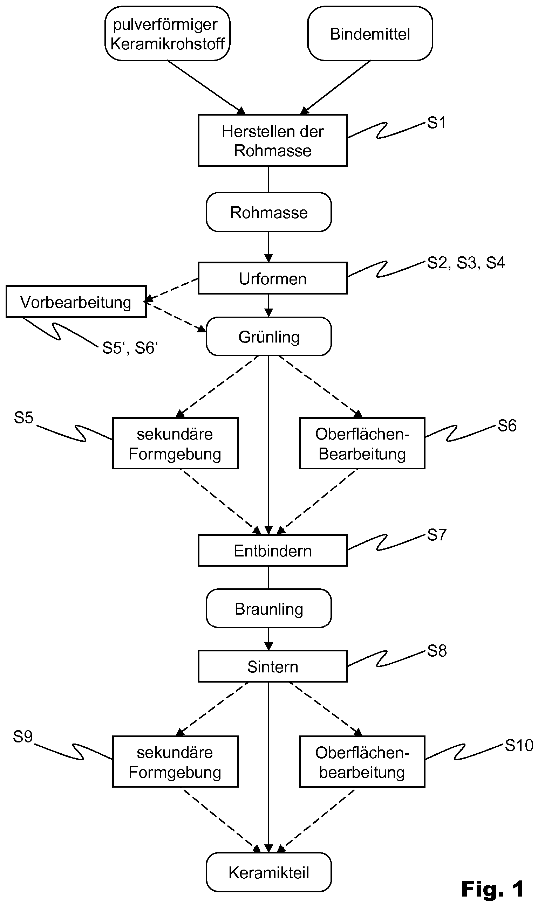

Ein vorteilhaftes Herstellungsverfahren für technische Keramikteile ist in Figur 1 dargestellt. In einem ersten Schritt S1 wird eine spritzgussfähige Rohmasse hergestellt, indem ein pulverförmiges keramisches Ausgangsmaterial mit einem geeigneten thermoplastischen polymeren Bindermaterial vermischt wird.

In einem Urform-Schritt S2, S3 und/oder S4 wird mit geeigneten Spritzguss-, 3D-Druck- bzw. Extrusionswerkzeugen die erhitzte Rohmasse in die gewünschte Form gebracht. Nach dem Abkühlen bzw. Entformen erhält man den sogenannten Grünling, die erste Stufe für den nachfolgenden Herstellungsprozess des Keramikteiles. Der Grünling entspricht in der Form im Wesentlichen dem zukünftigen Keramikteil, während die Dimensionen grösser sind, um die Schrumpfung während des Sinterns auszugleichen.

In einem dritten Schritt S7 wird bei der sog. Entbinderung mit geeigneten Verfahren aus dem Grünling ein Grossteil der Bindermaterial-Matrix entfernt. Der resultierende sog. Braunling besteht im Wesentlichen nur noch aus dem pulverförmigen Keramikausgangsmaterial, welches durch eine kleine verbleibende Menge an Bindermaterial in der Form gehalten wird.

In einem vierten Schritt S8 wird schliesslich der Braunling bei hohen Temperaturen gesintert. Der verbleibende Rest an Bindermaterial wird dabei pyrolisiert. Die für die Sinterung gewählte Temperatur verbleibt unterhalb der Schmelztemperatur der Keramik. Das thermodynamische Gesamtsystem verringert seine freie Enthalpie, indem keramisches Material lokal diffundiert und die einzelnen Partikel an den Berührungsstellen zusammenwachsen, was die Grenzflächenenergie senkt. Nach dem Abkühlen resultiert das fertig gesinterte Keramikteil.

### S1: Herstellung der Rohmasse

In einem erfindungsgemässen Herstellungsverfahren für Keramikteile wird in einem ersten Schritt S1 eine spritzgussfähige Rohmasse bereitgestellt. Als Keramikrohmaterial dient dabei pulverförmiges tetragonales Zirkonium(IV)oxid bzw. Zirkoniumdioxid (ZrO₂, nachfolgend einfach Zirkonoxid). Die tetragonale Kristallphase wird vorteilhaft durch Dotierung mit einigen mol% Yttrium(III)oxid (Y₂O₃) stabilisiert, beispielsweise 3-8 mol%. Die Zugabe von 3 Mol% Y2O3 führt zu einer metastabilen tetragonalen Phase. Bei sehr hoher mechanischer Belastung entstehen lokale Spannungsspitzen, die zur Bildung von Mikrorissen führen können. Das Spannungsfeld an der Rissspitze erzeugt die Umwandlung von der tetragonalen zur monoklinen Phase. Durch die dabei entstehende Volumenzunahme werden die Risse verdichtet und der Rissfortschritt ist gebremst. Häufig wird auch eine kleine Menge 0,2-0,3 % Aluminiumoxid zugegeben, was zusätzlich nochmals eine Erhöhung der mechanischen Eigenschaften bewirkt. Die mittlere Korngrösse beträgt beispielsweise ca. 300 nm und sollte sich insbesondere bei Zirkonoxid zwischen 250 und 350nm bewegen bzw. möglichst homogen sein, da sonst Festigkeitsprobleme auftreten können.

Zirkonoxid weist eine hohe Härte in Kombination mit hoher Elastizität und hoher Biegebruchfestigkeit auf. Dieses keramische Material ist deshalb sehr gut geeignet beispielsweise für bewegliche Bauteile, die unter hohen Belastungen während langer Zeit wartungsfrei und präzise funktionieren sollen, beispielsweise Zahnräder in miniaturisierten Getrieben. Auch für medizinische Implantate, wie beispielsweise Zahnimplantate, welche mit dem Knochengewebe verwachsen sollen, ist Zirkonoxid aufgrund seiner sehr guten Biokompatibilität ein sehr vorteilhaftes Material.

Als thermoplastisches Bindermaterial wird homopolymeres Polyoxymethylen (POM-H) verwendet. Da für die spätere Verwendung die bei POM übliche Säurestabilisation nicht vorteilhaft ist, wird auf eine Veretherung bzw. Veresterung der Polymer-Endguppen verzichtet. Der Schmelzpunkt von POM-H beträgt ca. 175-178 °C.

Das pulverförmige Zirkonoxid wird mit geeigneten Geräten mit dem thermoplastischen Binderpolymer homogen gemischt, so dass eine granulatförmige Rohmasse entsteht, die beispielsweise unter dem Produktnamen Catamold® von der Firma BASF vertrieben wird. Zu Herstellung der Rohmasse werden die Bestandteile unter Wärmeeinwirkung in Kneteranlagen homogen vermischt und anschliessend weiter homogenisiert. Entsprechende Technologien sind dem Fachmann aus der Herstellung von mit Füllstoffen beladenen Spritzgussrohpolymeren bekannt. Am Ende des Prozesses resultiert ein ThermoplastGranulat, wie es üblicherweise beim Spritzgiessen oder Extrudieren als Ausgangsmaterial verwendet wird, oder Thermoplast-Filamente, wie sie üblicherweise beim 3D-Druck verwendet werden.

### S2: Spritzgiessen

Das Rohgranulat wird anschliessend in einem nächsten Schritt S2 als Urformschritt mit geeigneten Thermoplast-Spritzgussmaschinen verarbeitet, in der das Bindermaterial aufgeschmolzen wird. Die nun wieder plastische, homogene Rohmasse wird unter hohem Druck (mehrere hundert bar) in entsprechende Spritzgusswerkzeuge gespritzt, wo die Masse in der gewünschten Form erstarrt. Sämtliche Teile der Spritzgusseinheit, die mit der Spritzgussmasse in Berührung kommen, wie z.B. Schnecke, Zylinder, Düse und Rückstromsperre, sind an die aufgrund der enthaltenen Keramikpartikel relativ hohe Abrasivität der Spritzgussmasse anzupassen. Dazu können diese Teile beispielsweise pulvermetallurgisch behandelt sein, um widerstandsfähige Hartmetalloberflächen aufzuweisen.

Nach dem Entformen und Auskühlen der Spritzgussteile können diese direkt als Grünlinge im Entbinderungsschritt S7 weiterverarbeitet werden, oder einer üblichen Nachbearbeitung unterzogen werden, beispielsweise der Entfernung des Angusses. Analog zu Kunststoffteilen kann der Anguss aufgearbeitet und ein weiteres Mal verwendet werden.

Es ist jedoch in einer alternativen Variante des erfindungsgemässen Verfahrens auch möglich, die Grünlinge einem weiteren formgebenden Schritt S5 zu unterziehen, beispielsweise Fräsen, Bohren, Schleifen oder Drehen.

Alternativ oder zusätzlich kann auch die Oberfläche des Grünlings bearbeitet werden. Ein solcher optionaler Arbeitsschritt S6 wird weiter unten noch beschrieben.

Als weitere Alternative oder zusätzliche Möglichkeit kann in wenigstens einem Vorbearbeitungsschritt S5' und/oder S6' die Form bzw. Oberfläche eines Körpers im Grünzustand noch während, beispielsweise zum Abschluss oder direkt nach dem Urformschritt S2, S2, S4 beeinflusst werden. So ist denkbar, im Vorbearbeitungsschritt S5', S6' die Form eines im Spritzguss S2 erzeugten Grünkörpers in seiner Spritzgussform zu beeinflussen, indem beispielsweise durch sog. "In-mold-closing" verschiedene Grünkörperabschnitte vor dem Auswurf aus dem Werkzeug zu einem Grünkörper zusammengeführt werden. Im Rahmen eines 3D-Druck-Schrittes S3 kann innerhalb eines Vorbearbeitungsschritts S5', S6' ein Abschnitt an einen Grünkörper angeformt oder verschiedene Grünkörper miteinander verbunden werden, der durch ein anderes Urformverfahren erzeugt wurden. Ein durch Extrusion gewonnener Grünkörperstrang bzw. ein Grünkörperprofil kann beim Vorberarbeitungsschritt S5', S6' zum Beispiel vereinzelt werden. Generell kann die Oberfläche während des wenigstens einen Vorbearbeitungschrittes S5', S6' beliebig verändert bzw. bearbeitet werden.

### S7: Entbinderung

Bei erfindungsgemässen Verfahren beruht die Entbinderung auf einem kontrollierten, säuregestarteten katalytischen Abbau des Bindermaterials POM-H in einem Temperaturbereich zwischen 90 bis 120 °C, bevorzugt bei 110°C, wenn das schon oben erwähnte Catamold® verwendet wird. Zirkonoxid hingegen ist gegenüber den meisten Säuren stabil. Beim Entbinderungsprozess werden die Polymerketten von den Enden her depolymerisiert und zu gasförmigem Formaldehyd abgebaut. Die vorteilhaft ebenfalls gasförmige Säure wirkt dabei von der Oberfläche des Grünlings her und diffundiert durch die offene poröse Struktur, die durch den Abbau der Binderpolymer-Matrix allmählich entsteht, ins Innere. Die beim säuregestartetem katalytischen Abbau entstehenden gasförmigen Formaldehyd-Monomere wiederum diffundieren durch die poröse Struktur nach aussen.

Der Entbinderungsprozess erfolgt somit kontinuierlich von aussen nach innen mit einer von der beigegebenen Säuremenge abhängigen Geschwindigkeit von ca. 0.1 bis 0.8 mm/h, insbesondere von 0.4 bis 0.6 mm/h. Eine Erhöhung der Säuremenge beschleunigt zwar den Entbinderungsprozess, der dadurch jedoch ungleichmässig werden kann, was wiederum problematisch sein kann.

Die Entbinderung wird, abhängig von der Dimensionierung der zu entbindernden Teile, so lange durchgeführt, bis die Bindermatrix über das gesamte Volumen des Werkteils soweit abgebaut ist, dass nur noch ein geringer Rest verbleibt (beispielsweise 0.3 - 0.5 Gew.% der ursprünglichen Bindermatrix). Es resultiert der im Wesentlichen nur noch aus Zirkonoxid-Partikeln bestehende Braunling. Der verbleibende kleine Rest der Bindermatrix von ca. 0.3 - 0.5 % dient der mechanischen Stabilisierung des Braunlings. Die restliche Bindermatrix wird im darauffolgenden Schritt der Sinterung S8 schon bei wenigen hundert °C beim Erwärmen des Braunlings auf Sintertemperatur vollständig pyrolisiert.

Die Entbinderung erfolgt bei erfindungsgemässen Verfahren bei erhöhter Temperatur und Normaldruck unter Verwendung von Salpetersäure als den Entbinderungsprozess startende Säure. Die Grünlinge werden in einen geeigneten Ofen transferiert und auf die vorgesehen Temperatur erhitzt. Bei einem erfindungsgemässen Verfahren liegt dabei die Temperatur in einem Bereich von 90 bis 110 °C und besonders vorteilhaft bei 110 °C.

Nach dem Erreichen der Prozesstemperatur wird eine gewisse Menge an Salpetersäure in den Ofen gegeben, die bei diesen Temperaturen in den dampfförmigen Zustand übergeht. Die Verweildauer hängt von der Geometrie der Werkteile ab.

Vorteilhaft wird aus dem Ofen austretendes Gas einer Reinigung zugeführt, um Salpetersäure und Formaldehyd aufzufangen. Entsprechende Technologien sind dem Fachmann bekannt, beispielsweise durch Abfackeln zu CO2 und H₂O oder durch Auskondensation und Gaswäsche.

Nach dem Entbindern werden die Braunlinge abgekühlt und für die nachfolgende Sinterung zwischengelagert.

### S8: Sinterung

Bei der Sinterung verbacken die einzelnen Partikeloberflächen des Keramikmaterials miteinander. In einem ersten Stadium lagern sich die einzelnen Partikel um und durch Materialdiffusion erhöht sich die Kontaktfläche, was die Grenzflächenenergie erniedrigt. In einem zweiten Stadium wachsen die einzelnen Partikel weiter zusammen und bilden sog. Hälse. Es bilden sich Korngrenzen. Im dritten Stadium wachsen die Körner, und das Porenkanalsystem wird reduziert. Während der Sinterung schrumpft das Werkstück und die Dichte steigt.

Die Sinterung von Zirkonoxid erfolgt in einem geeigneten Sinterofen, bei Temperaturen weit unterhalb der Phasenübergangstemperatur von der tetragonalen Kristallphase in die kubische Kristallphase (2370 °C bei reinem Zirkonoxid), und damit natürlich auch unterhalb der Schmelztemperatur (2690 °C). Bei einem erfindungsgemässen Verfahren liegt die Sintertemperatur in einem Bereich von 1350 bis 1550 °C, und vorteilhaft in einem Bereich von 1400 bis 1480 °C, insbesondere bei 1450 °C. Für ein möglichst feines Gefüge des Keramikmaterials werden eher niedrige Sintertemperaturen im unteren Bereich der genannten Temperaturspanne gewählt. Sintertemperaturen im oberen Bereich der Temperaturspanne erhöhen hingegen die Dichte und Korngrösse des Keramikmaterials, wodurch dessen Elastizität und Festigkeit abnehmen.

Der gesamte Sintervorgang dauert bei Zirkonoxid in Abhängigkeit von gewählter Temperatur und Bauteilgrösse ca. 24 bis 36 Stunden. Nach der Sinterung werden die Keramikteile langsam abgekühlt. Sie sind dann in ihrer Urform erstellt, mechanisch fest und ihre Oberfläche ist geschlossen. Durch den Sinterungsprozess unterliegen die Teile im Vergleich zum Grünling einer Schwindung von linear ca. 22% mit einem Toleranzbereich von ±0.3%. Die Schwindung beruht darauf, dass die nach Auslösen des Binders im Braunling vorhandenen Hohlräume zusammenschrumpfen.

In einer besonders vorteilhaften Variante eines erfindungsgemässen Verfahrens werden der Entbinderungsschritt und der Sinterungsschritt im gleichen Ofen durchgeführt, ohne dass dazwischen der Braunling abgekühlt, zwischengelagert und wieder erhitzt werden muss. Neben der dadurch resultierenden Energieersparnis und Reduktion des Arbeitsaufwands hat ein solches Vorgehen den Vorteil, dass mechanische Belastungen des Werkteils beim Abkühlen und Aufwärmen vermieden werden, und die sehr empfindlichen Braunlinge nicht durch fehlerhafte Behandlung beschädigt werden können.

Ein weiterer Vorteil liegt darin, dass ein solcher Ofen derart gebaut werden kann, dass er alle Schritte vom Grünling bis zum fertig gesinterten Keramikteil automatisch durchführen kann. Ein derartiger Ofen mit vergleichsweise kleinem Ladevolumen kann beispielsweise in einer Werkstatt zur Herstellung von Implantaten eingesetzt werden.

Es ist jedoch in einer alternativen Variante des erfindungsgemässen Verfahrens auch möglich, die Keramikteile nach dem Schritt S8 des Sinterns einem zusätzlichen formgebenden Schritt S9 zu unterziehen, beispielsweise Fräsen, Bohren, Schleifen oder Drehen.

Alternativ oder zusätzlich kann auch die Oberfläche der Keramikteile bearbeitet werden. Ein solcher optionaler Arbeitsschritt S10 wird weiter unten noch beschrieben.

### S3: 3D-Druck als formgebendes Verfahren

In einer weiteren vorteilhaften Variante eines erfindungsgemässen Verfahrens wird als Urformschritt, also als grundlegender formgebender Schritt zur Herstellung des Grünlings, anstatt des Spritzgussverfahrens S2 ein dreidimensionales Druckverfahren (3D-Druck) S3 eingesetzt.

In der Anmeldung der Anmelderin mit dem Titel "Freiform-Keramikbauteile", die am gleichen Tag wie diese Anmeldung angemeldet worden ist und als EP 3173227 A1 veröffentlich worden ist, wird ein solches vorteilhaftes Verfahren zur Herstellung von Grünlingen offenbart.

Mit einem geeigneten 3D-Druckersystem werden die Grünlinge additiv aus der thermoplastischen Rohmasse aufgebaut. Die Rohmasse besteht neben dem pulverförmigen, yttriumstabilisierten Zirkonoxid vorteilhaft wiederum aus POM-H als thermoplastischem Binderpolymer. Das thermoplastische Rohmaterial kann mit einem geeigneten Drucckopf, beispielsweise in Form einer Düse, punkt- oder streifenweise in flüssiger oder plastischer Form auf den im Aufbau befindlichen Grünling appliziert werden (sog. Fused Deposition Modeling). Um bei auskragenden Formen die notwendigen Stützstrukturen aufzubauen, kann ein zweites Material verwendet werden, beispielsweise ein in Lösungsmitteln leicht lösliches Polymer, dass anschliessend an den 3D-Druck des Grünlings aufgelöst werden kann, so dass nur das Materials des Grünlings verbleibt. Alternativ kann auch Bindermaterial ohne Zirkonoxid verwendet werden, welches bei der Entbinderung des Grünlings restlos abgebaut bzw. entfernt wird.

Alternativ kann das Rohmaterial als feines, rieselfähiges Pulver bereitgestellt und schichtweise durch Laserlicht aufgeschmolzen werden (sog. selektives Laserschmelzen), oder gesintert (sog. selektives Lasersintern), wobei sich hier der Begriff "Sintern" auf die Thermoplastpartikel bezieht, und nicht etwas auf das nachfolgende Sintern der Vielzahl an Keramikpartikeln innerhalb der Thermoplastpartikel. Um die Schmelztemperatur zu senken, kann die Kettenlänge des POM-H Polymers kürzer gewählt werden als bei einer Rohmasse für ein Spritzgussverfahren.

Der Vorteil von 3D-Druck bei der Anfertigung von Grünlingen liegt bei der Fertigung von Einzelteilen oder Kleinserien. Insbesondere lassen sich auf diese Weise aufgrund spezifischer 3D-Daten grössere Keramik-Implantate anfertigen, beispielsweise für die rekonstruktive Gesichtschirurgie.

Die auf diese Weise angefertigten Grünlinge können direkt mit den Schritten S7 (Entbinderung) und S8 (Sinterung) zum fertigen Keramikteil weiterverarbeitet werden. Alternativ kann vor der Entbinderung noch ein sekundärer Formgebungsschritt S5 erfolgen, und/oder eine Oberflächenbehandlung S6.

### S4: Extrusion als formgebendes Verfahren

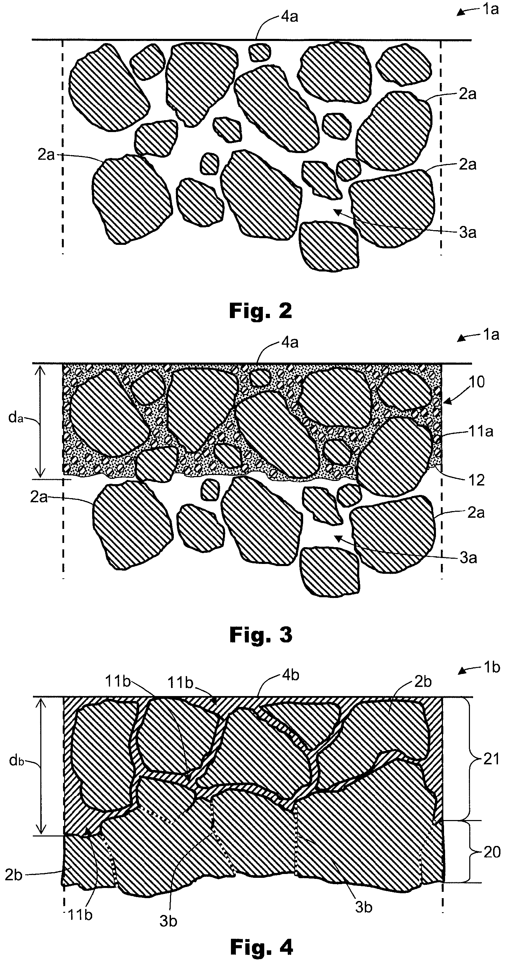

In einer weiteren vorteilhaften Variante eines erfindungsgemässen Verfahrens wird als Urformschritt zur Herstellung des Grünlings anstatt des Spritzgussverfahrens S2 oder des dreidimensionalen Druckverfahren S3 ein Extrusionsverfahren S4 eingesetzt. Der entsprechende Herstellungsprozess ist schematisch in Figur 3 dargestellt.

Ein Vorteil der Extrusion bei der Anfertigung von Grünlingen liegt bei der Fertigung von Kleinserien mit Stückzahlen, für die einerseits zu gering sind, als dass sich die Herstellung eines Spritzgusswerkzeugs lohnen würde, und die andererseits zu gross für die wirtschaftliche Anwendung eines 3D-Druckverfahrens sind. Insbesondere lassen sich durch Extrusion kleine gleichförmige Bauteile, wie beispielsweise Zahnräder oder Achsen, anfertigen.

### S5: Sekundäre Formgebung des Grünlings

Die Form des Grünlings kann den jeweiligen Anforderungen gemäss zumindest abschnittsweise beim und/oder nach dem Ent- bzw. Ausformen im Rahmen wenigstens eines sekundären Formgebungsschrittes S5 manipuliert werden.

Die Manipulation kann insbesondere erforderlich sein, wenn der Grünling durch Schwindungsprozesse beim Abkühlen einen Verzug aufweist. Dies kann beispielsweise der Fall sein, wenn der Grünling ein Vielzahl von auf einem Träger bzw. einer Trägerplatte angeordneten Bauteilen umfasst. Wenn die Bauteile entlang einer Längsseite des Trägers oder auf einer Flachseite der Trägerplatte angeordnet sind, so kann es erforderlich sein, einen Verzug des Trägers bzw. der Trägerplatte auszugleichen.

Der Ausgleich kann durch Zerspanen, beispielsweise Planschleifen der Bauteile, erfolgen. Um den Ausgleich zu erzielen können Abschnitte des Bauteile und/oder des Trägers abgenommen werden. Je nach Anforderung ist insbesondere bei relativ kleinen Bauteilen die Zerspanung sehr präzise, beispielsweise in Bereichen von 2 bis 10 µm maximalen Materialabtrags durchzuführen.

Des Weiteren kann die Manipulation erforderlich sein, wenn der Grünling durch Extrusion geformt ist. So wird bei der Extrusion in der Regel ein Grünkörperstrang bzw. -profil geformt, das eine Vielzahl noch zu vereinzelnder Bauteile im Grünzustand umfasst. Die Vereinzelung kann beispielsweise durch ein regelmässiges Abtrennen extrudierter Grünkörper aus dem Strang bzw. Profil erfolgen.

Da durch Extrusion in der Regel nur Stränge und Profile mit konstantem Querschnitt geformt werden können, sind jegliche an extrudierten Grünkörpern gewünschte Querschnittsveränderungen nachträglich anzubringen. So können am Grünling insbesondere jegliche Art von Vertiefungen, wie beispielsweise Kerben oder Nuten, entlang dessen Aussenumfang angebraucht werden.

Die Vertiefungen können zum einen durch Zerspanen ausgeformt werden. Zum anderen können die Vertiefungen aufgrund der thermoplastischen Eigenschaften des Grünlings mit Hilfe von Umform-Werkzeugen erzeugt werden, die in die Oberfläche des Grünlings eindringen. Beispielsweise kann ein Eindrücken der Oberfläche erfolgen, solange der Grünling nach dem Extrudieren noch nicht vollständig erkaltet ist, oder das Eindrücken erfolgt am erkalteten Grünkörper mittels eines erwärmten Werkzeugs, beispielsweise eines Stempels.

Zwar wäre als weitere Alternative eine sekundäre Formgebung am Braunling möglich. Jedoch ist der Braunling im Vergleich zum Grünling oder gesinterten Keramikteil relativ Spröde und zerbrechlich. Der Braunling ist nämlich, wie schon erwähnt, im Wesentlichen nur durch den Verbleibenden Binder zusammengehalten und weist eine vergleichsweise offenporige Struktur auf. Dies erschwert die Bearbeitung des Braunlings.

Um hier Abhilfe zu schaffen kann der Braunling zumindest oberflächlich in ein Füllmaterial, beispielsweise ein flüssiges thermoplastisches Polymer getaucht werden. Das erstarrte Polymer würde zumindest oberflächig die Poren des Braunlings füllen und diesen somit stabilisieren, was dessen sekundäre Formgebung, beispielsweise durch Einspannen sowie Zerspanen vereinfacht. Nach der sekundären Formgebung kann das Füllmaterial in einem weiteren Entbinderungsschritt und/oder beim Sintern pyrolisiert werden. Allerdings ist das Porenverfüllen mit einem gewissen Zeitaufwand verbunden, der sich nachteilig auf den Produktionsablauf bzw. die Produktionsgeschwindigkeit auswirken kann.

### S6: Oberflächen-Bearbeitung des Grünlings

Vorteilhaft wird die Erhöhung der Oberflächenrauhigkeit bereits beim Grünling vorgenommen, da dieser einfacher zu bearbeiten ist. In einer vorteilhaften Variante wird die Oberfläche des Grünlings sandgestrahlt. Da der Grünling eine wesentlich geringere Härte aufweist als das gesinterte Keramikteil, dauert dieser Prozess wesentlich kürzer als beim gesinterten Keramikteil.

In einer anderen vorteilhaften Variante wird die Oberfläche des Grünlings mit einer Vielzahl von eng fokussierten Laserpulsen bestrahlt, um die Oberfläche punktförmig aufzuschmelzen oder vorzugsweise zu verdampfen und so die gewünschte Rauhigkeit zu erreichen.

In einer weiteren Ausführungsform werden feine Keramikpartikel der gleichen Art wie die in der Rohmasse, also beispielsweise Zirkonoxid-Partikel, mit geeigneten Verfahren mit einer sehr dünnen Schicht Bindermaterial überzogen. Der Grünling kann nun mit diesen Partikeln beschichtet werden. Beispielsweise können die Grünlinge mit Heissluft oder Infrarot kurzfristig an der Oberfläche soweit erwärmt und die thermoplastische Matrix angeschmolzen werden, dass die binderbeschichteten Partikel daran kleben bleiben, wenn der erwärmte Grünling in eine Kammer mit verwirbeltem Partikelstaub gebracht wird, oder komplett oder zumindest gezielt abschnittsweise in ein Bad von entsprechendem Partikelstaub getaucht wird. Ein derart beschichtetes Keramikteil kann nun mit den bereits beschriebenen Entbinderungsverfahren und Sinterungsverfahren weiter verarbeitet werden. Die anhaftenden Keramikpartikel verbinden sich beim Sintern mit dem Keramikkörper, was zu einer erhöhten Oberflächenrauhigkeit führt.

Alternativ oder zusätzlich kann die Oberfläche des Grünlings zumindest abschnittsweise geglättet werden. Beispielsweise lassen sich so Unebenheiten auf der Oberfläche des Grünlings beseitigen, die sich aus dem jeweiligen formgebenden Verfahren ergeben können. Derartige Unebenheiten können insbesondere beim 3D-Druck-Verfahren im den Übergängen zwischen den einzelnen gedruckten Schichten entstehen. Um die Unebenheiten zu beseitigen kann beispielsweise ein Gasstoffstrom auf die Oberfläche des (noch thermoplastischen) Grünlings gerichtet werden. Auch kann die Oberfläche des Grünlings geschliffen werden.

### S9: Sekundäre Formgebung des Keramikteils

Die nach den oben genannten erfindungsgemässen Verfahren hergestellten Keramikteile können anschliessend weiter nachbearbeitet werden, beispielsweise mittels verschiedener Schleif- und Polierverfahren, Schneidverfahren, Sandstrahlen, Bearbeitung mittels Laser und Glasieren. Ebenfalls möglich sind Nachbearbeitungsverfahren, welche die strukturellen Eigenschaften der Keramik weiter verbessern, beispielsweise Heisspressen oder heiss-isostatisches Pressen. Beim heiss-isostatischen Pressen, dem sogenannten "HiPen", werden Keramikteile bei einem Druck von 2000 bis 3000 bar und annähernd Sintertemperatur an der Oberfläche nachverdichtet. Somit kann die Bruchfestigkeit des Keramikteils um bis zu 25% auf ca. 1300 MPa gesteigert werden.

Besonders vorteilhafte Nachbearbeitungsverfahren von Keramikteilen sind in der Anmeldung der Anmelderin mit dem Titel "Spezial-Keramikbauteile" offenbart, die am gleichen Tag wie diese Anmeldung angemeldet worden ist und als EP 16200486 A1 veröffentlich worden ist,

In einem solchen Verfahren wird in einem ersten Schritt das Keramikteil in eine Haltemasse zumindest abschnittsweise eingegossen oder eingetaucht- bzw. gedrückt. In einem zweiten Schritt wird ein Teil des Keramikteils zerspant. Die Haltemasse erlaubt es dabei, auch sehr fein strukturierte Keramikteile zu bearbeiten. Die Haltemasse schützt das Keramikteil vor mechanischen Beschädigungen und erlaubt das einfache Einspannen in Haltevorrichtung der Zerspanungsmaschine. In einem dritten Schritt wird die Haltemasse wieder entfernt, beispielsweise durch Auflösen der Haltemasse.

Vorteilhaft wird als Haltemasse ein lösliches Polymer, beispielsweise ein Harz, ein Zucker und/oder dessen oxidierte und kondensierte Reaktionsprodukte, verwendet. Das zu bearbeitende Keramikteil wird beispielsweise in die geschmolzene Haltemasse eingegossen oder in eine Haltemasseschicht eingedrückt. Der resultierende Block bzw. Verbund wird für den Zerspanungsvorgang in eine Halterung eingespannt. Nach dem Fräsvorgang wird die Haltemasse bzw. deren Polymermatrix mit geeigneten Lösungsmitteln aufgelöst, beispielsweise mit Wasser und/oder Alkohol bzw. Ethanol, einem Aceton-Wasser-Gemisch, einer wässrigen Borax- oder Ammoniaklösung, usw.

Vorteilhaft wird als Haltemasse ein natürliches Material verwendet, das biologisch abbaubar und physiologisch unbedenklich ist. Neben dem oben genannten Zucker kann als natürliches Harz beispielsweise gereinigter Gummilack verwendet werden. Dieser kann durch ebenfalls unproblematische Lösungsmittel wie Ethanol oder Borax-Lösung gelöst werden und ist mehrfach verwendbar. Alternativ kann auch mit Borax präalkalisierter gereinigter Gummilack verwendet werden, der direkt wasserlöslich ist.

Bei einer ersten Verfahrensvariante wird ein gemeinsames erweitertes Angussstück in Form eines Trägers bzw. einer Trägerplatte mit einer Mehrzahl von beispielsweise identischen Kleinteilen durch Zerspanen bspw. Schleifen entfernt, so dass schliesslich die vereinzelten Keramikkleinteile resultieren, beispielsweise Keramikzahnräder mit Durchmessern von wenigen Millimetern. Das erweitere Angussstück, welches beispielsweise die Form einer Platte haben kann, erlaubt zum einen beim Spritzgiessen einen homogenen Materialfluss über das gesamten Volumen des späteren Keramikkleinteils, und daraus resultierend entsprechend homogene Materialeigenschaften. Zum anderen werden mechanische Beschädigungen des Grünlings beim Entformen vermieden. Ebenfalls ist das Handling während der nachfolgenden Herstellungsschritte stark vereinfacht.

In einer anderen Verfahrensvariante wird flächig ein Teil eines im Wesentlichen plattenförmigen Keramikteils zerspant. Die Keramikplatte weist auf der einen Seite der Platte Ausnehmungen oder Vertiefungen auf, wie beispielsweise Sacklöcher oder Schlitze, welche beim flächigen Wegfräsen des Materials auf der anderen Seite der Platte angeschnitten werden. Es resultiert ein Keramikteil mit durchgehenden Löchern oder Schlitzen, die nicht direkt durch entsprechendes Spritzgiessen des Grünlings zu fertigen wären und die ansonsten nur sehr aufwendig durch nachträgliches Bearbeiten einer Keramikplatte mit Bohren oder Schlitzfräsen hergestellt werden könnten.

### S10: Oberflächen-Bearbeitung des Keramik-Teils

Die Oberfläche des gesinterten Keramikteils ergibt sich im Wesentlichen aus den Eigenschaften der Oberfläche des Grünlings bzw. Braunlings. Mit Spritzguss hergestellte Oberflächen sind vergleichsweise glatt. Für gewisse Anwendungen kann es jedoch vorteilhaft sein, die Oberflächenrauhigkeit des Keramikteils zu erhöhen, beispielsweise bei Implantaten, um das stabile Zusammenwachsen mit Knochengewebe zu erleichtern. Üblicherweise wird dazu die Oberfläche des gesinterten Keramikteils durch Sandstrahlen und/oder Ätzen aufgeraut. Zum Ätzen kann beispielsweise Flusssäure verwendet werden.

Alternativ oder zusätzlich kann die Oberfläche des Keramikteils geglättet werden.

### Erfindungsgemässes Einbringen von Additiven in ein Keramikteil

Figur 2 zeigt eine schematische Querschnittsansicht eines Abschnittes eines Keramikteils 1a im Braunzustand. Das Keramikteil 1a umfasst eine Vielzahl keramischer Partikel 2a, beispielsweise aus Zirkonoxid, die im Braunzustand unter der geringen Haftung verbleibenden Binders miteinander verbunden sind. Die Partikel 2a können Korngrößen von beispielsweise 100-300 nm bzw. eine mittlere Korngrösse von 250 nm aufweisen. Zwischen den keramischen Partikeln 2a sind Innen- bzw. Zwischenräume 3a gebildet. Durch die Zwischenräume 3a besitzt das Keramikteil 1a zumindest abschnittsweise eine gewisse Porosität. Die offene poröse Struktur ist durch den Abbau der Binderpolymer-Matrix bei der Umwandlung des Grünkörpers in den Braunkörper entstanden. Die Porosität ist dabei abhängig von dem Anteil der zuvor vorhandenen Binderpolymer-Matrix im Grünkörper. Je höher der Anteil der Binderpolymer-Matrix im Grünkörper ist, desto grösser ist die durch dessen Abbau entstehende offene poröse Struktur im Braunling. Des Weiteren weist das Keramikteil 1a eine Oberfläche 4a auf.

Figur 3 zeigt den in Figur 2 gezeigten Abschnitt des Keramikteils 1a in einer analogen schematischen Querschnittsansicht samt einer eingebrachten Dispersion als Additiv 10 mit Nanopartikeln als ein Zusatzmaterial 11a, die als disperse Phase in einer Transportsubstanz 12 als Dispersionsmedium fein verteilt aufgenommen sind. Die Dispersion 10 mit den Nanopartikeln 11a kann beispielsweise bis zu einer Eindringtiefe dₐ in das Keramikteil 1a, also die Zwischenräume 3a zwischen den Partikeln 2a eingedrungen sein. Die Nanopartikel 11a sind zumindest abschnittsweise in das Keramik Teil 1a eingebracht und können wenigstens teilweise dessen Oberfläche 4a benetzen. Der in Figur 3 gezeigte Zustand stellt die Ausgangssituation von dem Sintern dar, wobei zwischen den keramischen Partikeln 2a eine geringe durch nach dem Entbindern verbleibenden Restbinder bewirkte Haftung besteht.

Als alternative oder zusätzliche erfindungsgemässe Möglichkeit zur Einbringung von Zusatzmaterialien 11a in den Braunkörper können diese anstatt als dispergierte Nanopartikel im Additiv 10 in Form von anderen Stoffen in einem gelöstem Zustand in einem Lösungsmittel vorliegen. In diesem Falle wären die Dispersion 10 als Lösung, die Nanopartikel 11a als gelöster Stoff und die Transportsubstanz 12 als Lösungsmittel zu betrachten.

Gelöste Stoffe umfassen Metallsalze, wie Sulfate, Acetate, Chloride oder Ähnliches, wobei entsprechende organische oder anorganische Lösungsmittel für den jeweils zu lösenden Stoff auszuwählen sind. Das Lösungsmittel kann verdampft werden, wodurch das Salz in den Zwischenräumen 3a verbleibt. Das Salz kann wiederum durch Hitzeinwirkung dissoziiert und/oder durch Beigabe zusätzlicher Reaktanden weiter umgewandelt werden. Verbleibende Metall-Oxide können mitgesintert und/oder reduziert werden, beispielsweise im Rahmen von Redox-Reaktionen. Die Metalle können den jeweiligen Anforderungen gemäss ausgewählt werden.

Insbesondere ist darauf zu achten, dass die Metalle oder ihre Salze bei den jeweiligen Sintertemperaturen nicht selber verdampfen, sondern am gewünschten Ort verbleiben. Als Metalle können beispielsweise Erd-, Übergangs- und/oder Edelmetalle verwendet werden, wie Aluminium, Eisen, Nickel, Wolfram, Gallium, Zinn, Titan, Kobalt, Kupfer, Silber, Gold, Platin, etc. sowie Legierungen daraus. Es kann von Vorteil sein, wenn der Schmelzpunkt des jeweiligen Metalls bzw. der Legierung unterhalb der Sintertemperatur und der Siedepunkt oberhalb der Sintertemperatur liegt.

Figur 4 zeigt eine schematische Querschnittsansicht eines Abschnittes eines gesinterten Keramikteils 1a, das aus dem Keramikteil 1a im Braunzustand samt darin aufgenommenem Additiv 10 gebildet ist. Der Restbinder und die Transportsubstanz 12 werden bei der ersten Aufheizrampe im Sinterofen thermisch zersetzt bzw. vergast und ausgetrieben. Die verbleibende Porosität wird allmählich durch Steigerung der Temperatur bis auf Sintertemperatur und Diffusion an den Oberflächen der Grenzen der keramischen Partikel geschlossen. Ein Verdichten der Partikel 2a bis zur Ausheilung der Zwischenräume 3a bzw. Poren findet in einer festen Phase deutlich unterhalb der Schmelztemperatur des keramischen Werkstoffes statt. Die Enddichte nach dem Sintervorgang beträgt 96-100%.

Dabei tritt eine Verdichtung des Keramikteils 1a im Braunzustand unter konstanter Volumenreduzierung in allen drei Raumrichtungen auf, womit ein räumlicher Schwund mit einem Faktor von ca. 1,05 bis max. 1,3 gegenüber dem gesinterten Keramikteil 1b einhergeht.

Durch das Sintern wird beginnend bei der in Figur 3 gezeigten Ausgangssituation zunächst eine Umordnung der Partikel 2a bewirkt. An die Partikelumordnung schliesst sich eine Kontaktbildung zwischen den Partikeln 2a an. Dann wachsen Kontaktstellen 5b zwischen den Partikeln 2a zunächst in einer Phase des Kontaktwachstums. An das Kontaktwachstum schliesst sich ein Partikelwachstum, auch genannt Kornwachstum, an. Nach weiterem Kornwachstum und einem Porenausheilen liegt das gesinterte Keramikteil 1b mit gesinterten keramischen Partikeln 2b vor, wie es in Figur 4 gezeigt ist.

Bei einem erfindungsgemäss zumindest abschnittsweise mit dem Additiv 10 versehenen Keramikteil 1a, 1b liegen nach dem Sintern ein undotierter Bereich 20 und ein dotierter Bereich 21 vor. Im dotierten Bereich 21 sind die gesinterten keramischen Partikel 2b zumindest teilweise nicht direkt, sondern durch ein mitgesintertes Zusatzmaterial 10b voneinander getrennt bzw. miteinander verbunden, das wenigstens abschnittsweise eine Oberfläche 4b des gesinterten Keramikteils 1 b ausbilden kann. Eine der Stärke des dotierten Bereichs 21 entspricht Wesentlichen einer senkrecht von der Oberfläche 4b aus gemessenen durchschnittlichen Eindringtiefe d_{b} des mitgesinterten Zusatzmaterials 11 b.

Das erfindungsgemässe Verfahren ist nicht auf die Herstellung der hier beschriebenen technischen Keramikbauteile beschränkt, sondern kann zur Herstellung beliebiger Bauteile aus Keramik verwendet werden. Als Bauteile kommen beispielsweise Teile von medizinischen Implantaten, wie Zahnimplantaten in Frage.

Im Rahmen des Erfindungsgedankens sind Abweichungen von den oben beschriebenen Ausführungsbeispielen möglich. So kann auf Basis eines Keramikteils 1a im Braunzustand den jeweiligen Anforderungen gemäss ein gesintertes Keramikteil 1b hergestellt werden, wobei aus den keramischen Partikeln 2a im Braunzustand wie gewünscht gesinterte keramische Partikel 2b gebildet und aus Zwischenräumen 3a im Braunzustand Zwischenräume 3b zwischen im gesinterten Zustand sowie aus Oberflächen 4a im Braunzustand Oberfläche 4b im gesinterten Zustand erzeug werden.

Erfindungsgemäss in beliebiger Anzahl und Abfolge in die Zwischenräume 3a, 3b eingebrachte Additive 10 können den jeweiligen Anforderungen gemäss Zusatzmaterialien 11a im eingebrachten Zustand enthalten, aus denen Zusatzmaterialien 11b im mitgesinterten Zustand gebildet werden, wobei 12 Transportsubstanzen dabei helfen, die Zusatzmaterialien 11a, 11b in den jeweiligen Anforderungen gemässen Eindringtiefen da im Braunzustand bzw. Eindringtiefen d_{b} im mitgesinterten Zustand zu deponieren, um undotierter Bereiche 20 und dotierter Bereiche 21 bereitzustellen. Als Additive 10 können Suspensionen, Dispersionen und/oder Emulsionen eingesetzt werden. Die Zusatzmaterialien können keramische und/oder nicht-keramischer Natur sein.

Die vorliegende Erfindung ist in ihrem Umfang nicht auf die hier beschriebenen spezifischen Ausführungsformen beschränkt. Vielmehr ergeben sich für den Fachmann aus der Beschreibung und den dazugehörigen Figuren zusätzlich zu den hier offenbarten Beispielen verschiedene weitere Modifikationen der vorliegenden Erfindung, die ebenfalls in den Schutzbereich der Ansprüche fallen.

### Bezugszeichenliste

- 1a: Keramikteil im Braunzustand
- 1b: gesintertes Keramikteil
- 2a: keramischer Partikel im Braunzustand
- 2b: gesinterte keramische Partikel
- 3a: Zwischenraum zwischen keramischen Partikeln im Braunzustand
- 3b: Zwischenraum zwischen keramischen Partikeln im gesinterten Zustand
- 4a: Oberfläche Keramikteil im Braunzustand
- 4b: Oberfläche Keramikteil im gesinterten Zustand

- 10: Additiv
- 11a: Zusatzmaterial im eingebrachten Zustand
- 11b: Zusatzmaterial im mitgesinterten Zustand
- 12: Transportsubstanz

- 20: Undotierter Bereich
- 21: Dotierter Bereich

- dₐ: Eindringtiefe des Zusatzmaterials im Braunzustand
- d_{b}: Eindringtiefe des Zusatzmaterials im mitgesinterten Zustand

## Patentansprüche

1. Verfahren zur Herstellung von wenigstens einem gesinterten Keramikteil (1b), wobei ein Keramikteil (1a) vor dem Sintern in einem offenporösen Braunkörperzustand vorliegt und wenigstens bereichsweise auf seiner Oberfläche (4a) mit einem Additiv (10) in Form einer Lösung umfassend ein Lösungsmittel als Transportsubstanz (12) und ein darin gelöster Stoff in Form eines Metallsalzes als Zusatzmaterial (11a) versehen und anschliessend gesintert wird, **dadurch gekennzeichnet, dass** das Zusatzmaterial (11a) vor dem und/oder bei dem Sintern reduziert wird.

2. Verfahren nach Anspruch 1, **dadurch gekennzeichnet, dass** das Additiv (10) in Zwischenräume (3a) zwischen keramischen Partikeln (2a) des Keramikteils (1a) eingebracht wird.

3. Verfahren nach Anspruch 2, **dadurch gekennzeichnet, dass** wenigstens Teile des Additivs (10) und gesinterte keramische Partikel (2b) einen im Wesentlichen porenfreien Verbund bilden.

4. Verfahren nach wenigstens einem der Ansprüche 1 bis 3, **dadurch gekennzeichnet, dass** eine Oberfläche (4a) des Keramikteils zumindest abschnittsweise mit dem Additiv (10) benetzt wird.

5. Verfahren nach wenigstens einem der Ansprüche 1 bis 4, **dadurch gekennzeichnet, dass** ein undotierter Bereich (20) des gesinterten Keramikteils (1b), der vor dem Sintern nicht mit dem Additiv (10) versehen worden war, und ein dotierter Bereich (21), der vor dem Sintern mit dem Additiv (10) versehen worden war, gebildet werden.

6. Verfahren nach Anspruch 5, **dadurch gekennzeichnet, dass** der dotierte Bereich (21) eine höhere elektrische Leitfähigkeit besitzt als der undotierte Bereich (20).

7. Verfahren nach Anspruch 5 oder 6, **dadurch gekennzeichnet, dass** der dotierte Bereich (21) durch Einbringen elektrischer Energie nach dem Sintern erodiert wird.

8. Verfahren nach Anspruch 1, **dadurch gekennzeichnet, dass** die Transportsubstanz (12) vor dem und/oder beim Sintern durch Hitzeeinwirkung wenigstens teilweise verdampft und/oder dissoziiert wird.

9. Verfahren nach Anspruch 1 oder 8, **dadurch gekennzeichnet, dass** das Zusatzmaterial (11a) vor dem und/oder beim Sintern durch Hitzeeinwirkung wenigstens teilweise dissoziiert wird.

10. Verfahren nach wenigstens einem der Ansprüche 8 oder 9, **dadurch gekennzeichnet, dass** das Zusatzmaterial (11a) in der Transportsubstanz (12) dispergierte Nanopartikel umfasst.

11. Verfahren nach wenigstens einem der Ansprüche 1 bis 10, **dadurch gekennzeichnet, dass** das Zusatzmaterial (11a) und/oder daraus gewonnene Zusatzstoffe mitgesintert werden bzw. wird.

## Claims

1. Process for producing at least one sintered ceramic part (1b), wherein before sintering a ceramic part (1a) is present in an open-pored brown body state, and is provided at least in regions of its surface (4a) with an additive (10) in the form of a solution comprising a solvent as carrier substance (12) and a solid in the form of a metal salt dissolved therein as additional material (11a), and is subsequently sintered, **characterized in that** the additional material (11a) is reduced before and/or during sintering.

2. Process according to Claim 1, **characterized in that** the additive (10) is introduced into interstices (3a) between ceramic particles (2a) of the ceramic part (1a).

3. Process according to Claim 2, **characterized in that** at least parts of the additive (10) and sintered ceramic particles (2b) form an essentially pore-free composite.

4. Process according to at least one of Claims 1 to 3, **characterized in that** a surface (4a) of the ceramic part is wetted at least in sections with the additive (10).

5. Process according to at least one of Claims 1 to 4, **characterized in that** an undoped region (20) of the sintered ceramic part (1b), which had not been provided with the additive (10) before sintering, and a doped region (21), which had been provided with the additive (10) before sintering, are formed.

6. Process according to Claim 5, **characterized in that** the doped region (21) has a higher electrical conductivity than the undoped region (20).

7. Process according to Claim 5 or 6, **characterized in that** the doped region (21) is eroded after sintering by introduction of electric energy.

8. Process according to Claim 1, **characterized in that** the carrier substance (12) is at least partially vaporized and/or dissociated by action of heat before and/or during sintering.

9. Process according to Claim 1 or 8, **characterized in that** the additional material (11a) is at least partially dissociated by action of heat before and/or during sintering.

10. Process according to at least one of Claims 8 and 9, **characterized in that** the additional material (11a) comprises nanoparticles dispersed in the carrier substance (12).

11. Process according to at least one of Claims 1 to 10, **characterized in that** the additional material (11a) and/or admixtures obtained therefrom are/is co-sintered.

## Revendications

1. Procédé de fabrication d'au moins une pièce en céramique frittée (1b), dans lequel une pièce en céramique (1a) se présente avant le frittage dans un état de corps brun à porosité ouverte et est munie au moins en zones sur sa surface (4a) d'un additif (10) sous la forme d'une solution comprenant un solvant en tant que substance de transport (12) et une matière dissoute dans celui-ci sous la forme d'un sel métallique en tant que matériau d'ajout (11a) et est ensuite frittée, **caractérisé en ce que** le matériau d'ajout (11a) est réduit avant et/ou pendant le frittage.

2. Procédé selon la revendication 1, **caractérisé en ce que** l'additif (10) est disposé dans des espaces intermédiaires (3a) entre des particules céramiques (2a) de la pièce en céramique (1a).

3. Procédé selon la revendication 2, **caractérisé en ce qu'**au moins des parties de l'additif (10) et des particules céramiques frittées (2b) forment un composite essentiellement exempt de pores.

4. Procédé selon au moins l'une quelconque des revendications 1 à 3, **caractérisé en ce qu'**une surface (4a) de la pièce en céramique est mouillée au moins en sections avec l'additif (10).

5. Procédé selon au moins l'une quelconque des revendications 1 à 4, **caractérisé en ce qu'**une zone non dopée (20) de la pièce en céramique frittée (1b), qui n'a pas été munie de l'additif (10) avant le frittage, et une zone dopée (21), qui a été munie de l'additif (10) avant le frittage, sont formées.

6. Procédé selon la revendication 5, **caractérisé en ce que** la zone dopée (21) présente une conductivité électrique plus élevée que la zone non dopée (20).

7. Procédé selon la revendication 5 ou 6, **caractérisé en ce que** la zone dopée (21) est érodée après le frittage par apport d'énergie électrique.

8. Procédé selon la revendication 1, **caractérisé en ce que** la substance de transport (12) est au moins partiellement évaporée et/ou dissociée avant et/ou pendant le frittage par action de chaleur.

9. Procédé selon la revendication 1 ou 8, **caractérisé en ce que** le matériau d'ajout (1 1a) est au moins partiellement dissocié avant et/ou pendant le frittage par action de chaleur.

10. Procédé selon au moins l'une quelconque des revendications 8 ou 9, **caractérisé en ce que** le matériau d'ajout (11a) comprend des nanoparticules dispersées dans la substance de transport (12).

11. Procédé selon au moins l'une quelconque des revendications 1 à 10, **caractérisé en ce que** le matériau d'ajout (11a) et/ou des ajouts obtenus à partir de celui-ci est ou sont frittés conjointement.
